# EUROPÄISCHE PATENTSCHRIFT

(11) **EP 1 914 465 B1**
(45) Veröffentlichungstag und Bekanntmachung des Hinweises auf die Patenterteilung: **22.04.2009**
(21) Anmeldenummer: 07033512.0
(22) Anmeldetag: 04.10.2007
(51) Int. Cl.: F16L 47/14, F16L 23/032

(54) **Flanschverbindung für Rohrleitungen**
Flange connection for pipes
Connexion à brides pour tuyaux

(30) Priorität: 20.10.2006 DE 102006049594
(43) Veröffentlichungstag der Anmeldung: 23.04.2008
(73) Patentinhaber: Reinert - Ritz GmbH, 48531 Nordhorn (DE)
(72) Erfinder: Reinert, Karl-Albert, 48527 Nordhorn (DE)
(74) Vertreter: Ostriga, Sonnet, Wirths & Roche

(56) Entgegenhaltungen:
- EP-A- 0 793 049
- DE-A1- 2 900 773
- DE-A1- 19 754 569
- GB-A- 1 112 421

## Beschreibung

Die Erfindung betrifft eine Flanschverbindung für Rohrleitungen, Behälter, Apparate od. dgl. aus Kunststoff, mit zwei Flanschen und zwei mittels diesen zu verbindenden Rohrstücken, insbesondere Losflanschverbindung mit Vorschweißbunden, wobei jedes Rohrstück einen Ringbund mit einer Dichtfläche und einer Flanschanlagefläche, sowie einen zylindrischen Rohrabschnitt aufweist und die Flansche mittels Flanschverschraubungen gegeneinander und von außen gegen die Flanschanlageflächen der Ringbunde verspannbar sind, wobei der Mantel des zylindrischen Rohrabschnitts über eine Kehlnut in die Flanschanlagefläche übergeht, in welche die Kehlnut eingearbeitet ist, in die ein vom Flansch gebildeter Ringwulst eingreift.

Eine gattungsgemäße Flanschverbindung ist z.B. aus EP-A-0793049 oder DE 597 03 375.7 bekannt. Der dort offenbarten Flanschverbindung liegt das Problem zugrunde, dass thermoplastischer Kunststoff unter hohen Druck- bzw. Zugspannungen ein Fließverhalten aufweist. Dies führt dazu, dass bei sehr hohen Fluiddrücken innerhalb thermoplastischer Kunststoffrohre die Vorschweißbunde sich mit der Zeit elastisch verformen und quasi zwischen den Flanschen herausziehen. In der Regel kommt es so zu Undichtigkeiten im Bereich der Flanschverbindung.

Diesem Problem konnte in DE 597 03 375.7 begegnet werden, indem die Vorschweißbunde, die im weiteren auch als Ringbunde bezeichnet werden, im Bereich des Überganges in den zylindrischen Rohrabschnitt mit einer umlaufenden Kehlnut versehen wurden, in welche Ringwülste geeigneter Flansche eingreifen.

Die so modifizierte Flanschverbindung hat sich in der Praxis vielfach bewährt und hält Rohrinnendrücken bis ca. 16 bar stand.

Es hat sich jedoch herausgestellt, dass sich bei höheren Innendrücken die Vorschweißbunde auch bei einer Flanschverbindung gemäß der vorzitierten Druckschrift elastisch verformen, was zu Undichtigkeiten führen kann.

Aufgabe der Erfindung ist es daher, ausgehend vom vorzitierten Stand der Technik, eine verbesserte Flanschverbindung insbesondere für Kunststoffrohre mit Vorschweißbunden zu schaffen, welche auch Innendrücken jenseits der Grenze von 16 bar sicher standhält.

Diese Aufgabe wird gelöst von einer Flanschverbindung mit den Merkmalen des Anspruches 1, die sich dadurch kennzeichnet, dass jeder Flansch eine im Querschnitt etwa keilförmige Kammer aufweist, die von dem Ringwulst und von einer dem Ringbund zugeordneten, von der Ringwulstwurzel in Richtung der Dichtfläche geneigt verlaufenden Flanschinnenfläche gebildet ist, und jeder Ringbund einen in die Kammer formschlüssig eingreifenden, im Querschnitt etwa keilförmigen Vorsprung ausbildet.

Auf Seiten des Flansches bildet sich so eine von Ringwulst und Flanschinnenfläche begrenzte, keilförmige Kammer, in welche sich der ringbundseitige, durch Kehlnut und Schrägfläche eine in etwa keilförmige Kontur aufweisende Vorsprung einkeilt. Die unter hohen Rohrinnendrücken auftretende Fließbewegung des Ringbundes führt zu einer Selbstkammerung des in etwa keilförmigen Vorsprunges im Flansch und verhindert so das Herausziehen des Ringbundes aus dem Flanschzwischenraum. Diese spezielle Ausgestaltung von Ringbund und Flansch gewährleistet auch bei sehr hohen Rohrinnendrücken jenseits der Grenze von 16 bar eine dichte und dauerhafte Flanschverbindung.

Als besonders vorteilhaft hat sich eine Ausführungsform erwiesen, bei welcher die Flanschinnenfläche eine Neigung zwischen 20° und 35° aufweist, wobei eine Neigung von etwa 27° bevorzugt ist.

Eine weitere Ausführungsform kennzeichnet sich dadurch, dass der Innendurchmesser des Flansches im Wesentlichen dem Außendurchmesser des zylindrischen Rohrabschnittes entspricht, und der Flansch an seinem Innenrand den in den in die Kehlnut eingreifenden Ringwulst aufweist, wodurch der Flansch eine möglichst hohe Kammer ausbilden kann.

Die Kammertiefe wird insbesondere von dem Ringwulst bestimmt, so dass gemäß bevorzugter Ausführungsformen die Länge des Ringwulstes etwa der Hälfte der axialen Breite des Flansches, einem Drittel der axialen Breite des Flansches oder zwei Dritteln der axialen Breite des Flansches entspricht.

Vorteilhaft weisen die Flanschanlageflächen und die Flanschinnenflächen eine korrespondierende Konturierung auf, mittels derer sich beide Flächen miteinander verzahnen.

Weitere Vorteile der Erfindung ergeben sich aus der folgenden Zeichnungsbeschreibung. Es zeigt:
Fig. 1 Einzelteile einer erfindungsgemäßen Flanschverbindung,
Fig. 2 die Flanschverbindung gemäß Fig. 1 mit montierten Einzelteilen, und
Fig. 3 eine Darstellung des Fließverhaltens der thermoplastischen Ringbunde der Flanschverbindung gemäß Fig. 2.

Eine Flanschverbindung ist in den Figuren durchgängig mit der Bezugsziffer 10 versehen.

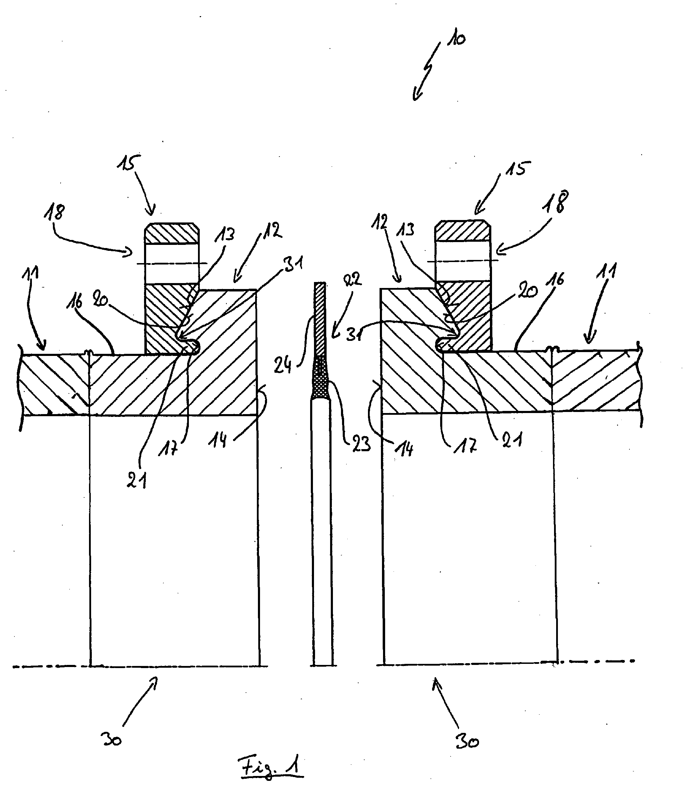

Die in Fig. 1 mit ihren Einzelteilen in unmontiertem Zustand dargestellte Flanschverbindung 10 umfasst zunächst zwei Rohre 11 aus thermoplastischem Kunststoff, die mit jeweils einem Rohrstück 30, bestehend aus einem Rohrabschnitt 16 und einem Ring- bzw. Vorschweißbund 12 beispielsweise mittels Heizelement-Stumpfschweißung verbunden sind.

Der Ringbund 12 umfasst zwei im Wesentlichen in entgegengesetzte Richtungen weisende Flächen 13 und 14, von denen die zum Flansch 15 weisende Fläche als Flanschanlagefläche 13 und die dem Flansch 15 abgewandte Fläche als Dichtfläche 14 ausgebildet ist. Der Ringbund 12 weist weiterhin in seinem in den zylindrischen Rohrabschnitt 16 übergehenden Bereich eine umlaufende Kehlnut 17 auf.

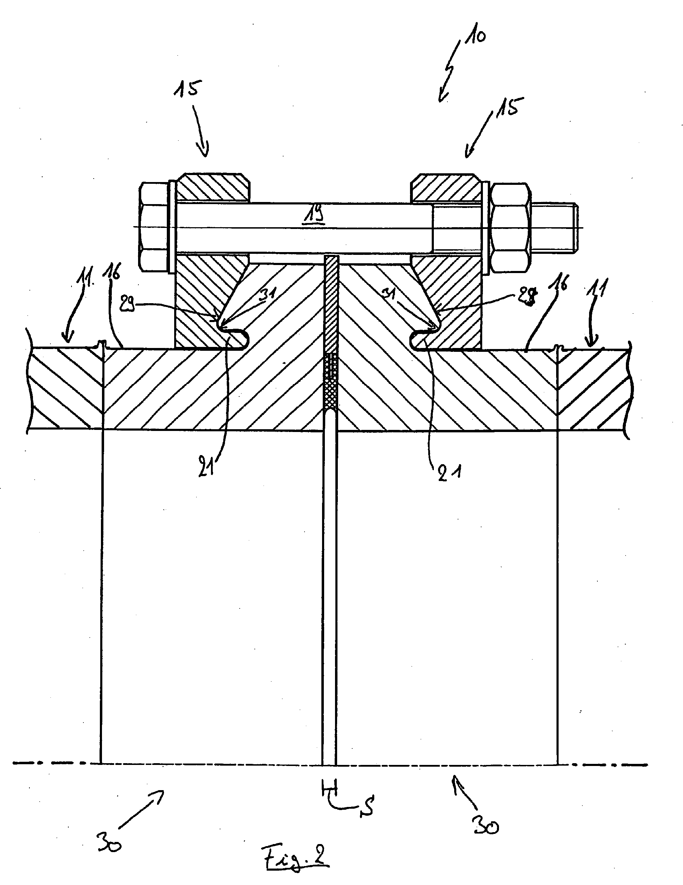

Der Flansch 15 umfasst mehrere, auf seiner Umfangslinie verteilt angeordnete Bohrungen 18, welche - wie in Fig. 2 dargestellt - Schraubbolzen 19 aufnehmen, mittels derer die Flansche 15 und somit mittelbar die Ringbunde 12 gegeneinander verspannt und die Rohre 11 miteinander verbunden werden. Weiterhin bildet jeder Flansch 15 dem Ringbund 12 zugeordnete Flanschinnenflächen 20 aus. Jede Flanschinnenfläche 20 geht in einen im Bereich des Innenumfanges des Flansches 15 angeordneten Ringwulst 21 über, der in die Kehlnut 17 des Ringbundes 12 eingreift.

Die Flanschinnenfläche 20 des Flansches 15 ist ausgehend von der Ringwulstwurzel 31 in Richtung der Dichtfläche 14 geneigt, wobei die Ringwulstwurzel 31 als der Bereich definiert sei, in dem der Ringwulst 21 dem Flansch 15 entspringt. Gemeinsam mit dem Ringwulst 21 begrenzt die Flanschinnenfläche 20 eine zum Ringbund 12 hin geöffnete, im Querschnitt etwa keilförmige Kammer.

Die Flanschanlagefläche 13 des Ringbundes 12 ist demgegenüber ausgehend von der Öffnung der Kehlnut 17 in Richtung der Dichtfläche 14 geneigt. Begrenzt durch die Flanschanlagefläche 13 und die Kehlnut 17 bildet der Ringbund 12 so einen mit der Kammer korrespondierenden, in etwa keilförmigen Vorsprung 29 aus, der formschlüssig in die Kammer eingreift.

Bei Praxisversuchen hat sich gezeigt, dass eine Neigung der auch als Schrägflächen zu bezeichnenden Flanschanlageflächen 13 und Flanschinnenflächen 20 von 20° bis 35° vorteilhaft ist, wobei eine Neigung von ca. 27° eine bevorzugte Ausführungsform darstellt.

Um die Dichtigkeit der Flanschverbindung 10 zu gewährleisten, wird zwischen den Ringbunden 12 eine Dichtscheibe 22 eingesetzt. Die Dichtscheibe 22 besteht aus einem Polyethylen-Tragring 24 und der eigentlichen, aus einem Elastomer bestehenden, ringförmigen Dichtung 23.

In Fig. 2 sind die Einzelteile der Flanschverbindung zusammengesetzt dargestellt, wobei die Rohre 11 mittels der auf die Ringbunde 12 einwirkenden Flansche 15 gegeneinander verspannt sind.

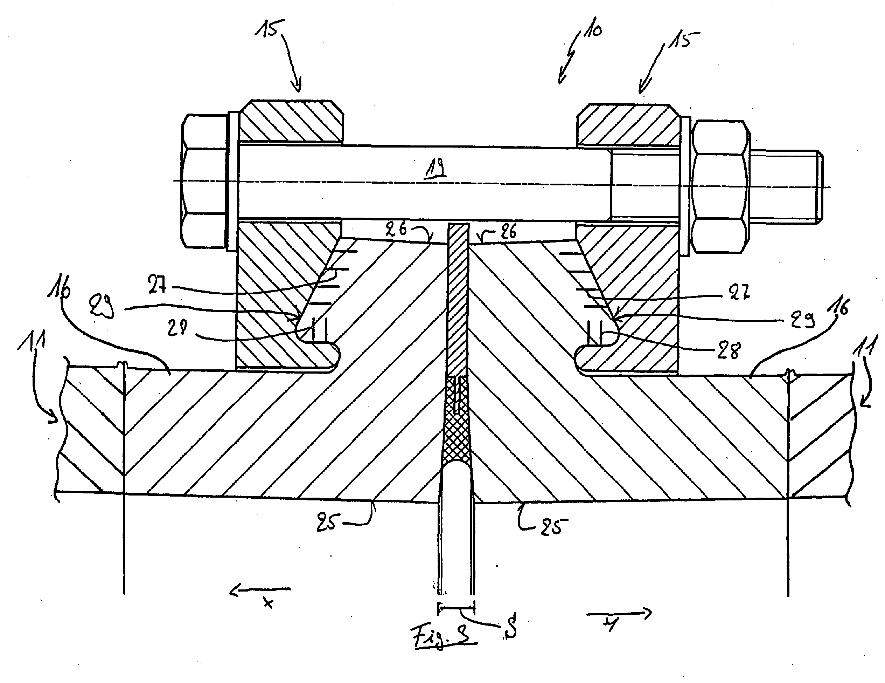

In Fig. 3 ist die Flanschverbindung 10 in einer Belastungssituation dargestellt. Hohe Rohrinnendrücke üben auf die Flanschverbindung 10 Zugkräfte in Pfeilrichtung x und y aus. Das Fließverhalten der thermoplastischen Kunststoffrohre 11 führt dazu, dass die Ringbunde 12 tendenziell die Neigung haben, sich elastisch zu verformen und sich etwa in Richtung der Zugspannung x bzw. y aus dem Flanschzwischenraum herauszuziehen. Dies ist in Fig. 3 mittels der abgewinkelt dargestellten Innenumfangsflächen 25 der Rohre 11 und Außenumfangsflächen 26 der Ringbunde 12 sowie mittels des gegenüber Fig. 2 erweiterten Spaltes S schematisch angedeutet. Bezüglich der Zeichnungsebene waagerecht angeordnete Pfeile 27 und senkrecht angeordnete Pfeile 28 symbolisieren die auf die Flansche 15 wirkenden Kräfte.

Aus Fig. 3 wird deutlich, dass sich die keilförmigen, von der Dichtfläche 14 wegweisenden Vorsprünge 29 der Ringbunde 12 in den von den Flanschen 15 gebildeten Kammern verkeilen. Dieser auch als Selbstkammerung der Ringbunde 12 zu bezeichnende Vorgang verhindert auch unter sehr hohen Drücken jenseits der bislang kritischen Grenze von etwa 16 bar Rohrinnendruck ein Herausziehen bzw. Herausfließen der Ringbunde 12 aus dem Flanschzwischenraum. Die mittels der Schraubbolzen 19 und der Flansche 15 auf die Ringbunde übertragene Zugspannung zur dichtenden Verbindung der beiden Rohre 11 bleibt so in ausreichendem Maße vorhanden.

Es ist offensichtlich, dass flanschseitig möglichst große Kammern und bundseitig möglichst große Vorsprünge 29 von Vorteil sind. Deshalb entspricht der Innendurchmesser der Flansche 15 im Wesentlichen dem Außendurchmesser der Rohre und die Flansche 15 weisen im Bereich ihres Innenumfanges, bevorzugt an ihrem Innenrand, die in die Kehlnuten 17 eingreifenden Ringwülste 21 auf.

Die Kammertiefe wird wesentlich von der axialen Ringwulstlänge beeinflusst. Im vorliegenden Ausführungsbeispiel beträgt die Länge des Ringwulstes 21 etwas ein Drittel der axialen Breite des Flansches 15. Bei weiteren bevorzugten, jedoch nicht dargestellten Ausführungsformen ist eine axiale Ringwulstlänge von etwa der Hälfte bis zwei Dritteln der axialen Breite des Flansches 15 vorgesehen.

Um eine Verzahnung von Flanschinnenfläche 20 und Flanschanlagefläche 13 zu erreichen, sieht eine nicht dargestellte Ausführungsform vor, beide Flächen korrespondierend zu konturieren.

## Patentansprüche

1. Flanschverbindung (10) für Rohrleitungen (11), Behälter, Apparate od. dgl. aus Kunststoff, mit zwei Flanschen (15) und zwei mittels diesen zu verbindenden Rohrstücken (30), insbesondere Losflanschverbindung mit Vorschweißbunden, wobei jedes Rohrstück (30) einen Ringbund (12) mit einer Dichtfläche (14) und einer Flanschanlagefläche (13), sowie einen zylindrischen Rohrabschnitt (16) aufweist und die Flansche (15) mittels Flanschverschraubungen (19) gegeneinander und von außen gegen die Flanschanlageflächen (13) der Ringbunde (12) verspannbar sind, wobei der Mantel des zylindrischen Rohrabschnitts (16) über eine Kehlnut (17) in die Flanschanlagefläche (13) übergeht, in welche die Kehlnut (17) eingearbeitet ist, in die ein vom Flansch (15) gebildeter Ringwulst (21) eingreift, **dadurch gekennzeichnet, dass** jeder Flansch (15) eine im Querschnitt etwa keilförmige Kammer aufweist, die von dem Ringwulst (21) und von einer dem Ringbund (12) zugeordneten, von der Ringwulstwurzel in Richtung der Dichtfläche (14) geneigt verlaufenden Flanschinnenfläche (20) gebildet ist, und jeder Ringbund (12) einen in die Kammer formschlüssig eingreifenden, im Querschnitt etwa keilförmigen Vorsprung (29) ausbildet.

2. Flanschverbindung nach Anspruch 1 , **dadurch gekennzeichnet, dass** die Flanschinnenfläche (20) eine Neigung zwischen 20° und 35° aufweist.

3. Flanschverbindung nach einem der Ansprüche 1 oder 2, **dadurch gekennzeichnet, dass** die Flanschinnenfläche (20) eine Neigung von etwa 27° aufweist.

4. Flanschverbindung nach einem der Ansprüche 1 bis 3, **dadurch gekennzeichnet, dass** der Innendurchmesser des Flansches (15) im wesentlichen dem Außendurchmesser des zylindrischen Rohrabschnittes (16) entspricht, und der Flansch (15) an seinem Innenrand den in den in die Kehlnut (17) eingreifenden Ringwulst (21) aufweist.

5. Flanschverbindung nach einem der vorhergehenden Ansprüche, **dadurch gekennzeichnet, dass** die Länge des Ringwulstes (21) etwa der Hälfte der axialen Breite des Flansches (15) entspricht.

6. Flanschverbindung nach einem der Ansprüche 1 bis 4, **dadurch gekennzeichnet, dass** die Länge des Ringwulstes (21) etwa zwei Dritteln der axialen Breite des Flansches (15) entspricht.

7. Flanschverbindung nach einem der Ansprüche 1 bis 4, **dadurch gekennzeichnet, dass** die Länge des Ringwulstes (21) etwa einem Drittel der axialen Breite des Flansches (15) entspricht.

8. Flanschverbindung nach einem der vorhergehenden Ansprüche, **dadurch gekennzeichnet, dass** die Flanschinnenfläche (20) und die Flanschanlagefläche (13) konturiert ausgebildet sind.

## Claims

1. Flange connection (10) for pipes (11), containers, apparatus or the like made of plastic, having two flanges (15) and two pipe pieces (30) to be connected by means of the latter, in particular lapped flange connection with welding necks, each pipe piece (30) having an annular neck (12) with a sealing surface (14) and a flange bearing surface (13), and also a cylindrical pipe portion (16), and the flanges (15) being able to be clamped by means of flange screwed connections (19) against one another and from outside against the flange bearing surfaces (13) of the annular necks (12), the lateral surface of the cylindrical pipe portion (16) merging via a groove (17) into the flange bearing surface (13), in which is made the groove (17) in which an annular bead (21) formed by the flange (15) engages, **characterised in that** each flange (15) has a chamber which is approximately wedge-shaped in cross-section and formed by the annular bead (21) and by a flange inner surface (20) associated with the annular neck (12) and running in an inclined manner from the annular bead root in the direction of the sealing surface (14), and each annular neck (12) forms a projection (29) which is approximately wedge-shaped in cross-section and engages in a form-fitting manner in the chamber.

2. Flange connection according to Claim 1, **characterised in that** the flange inner surface (20) has an inclination between 20° and 35°.

3. Flange connection according to one of Claims 1 and 2, **characterised in that** the flange inner surface (20) has an inclination of approximately 27°.

4. Flange connection according to one of Claims 1 to 3, **characterised in that** the inside diameter of the flange (15) corresponds substantially to the outside diameter of the cylindrical pipe portion (16), and the flange (15) has at its inner edge the annular bead (21) engaging in the groove (17).

5. Flange connection according to one of the preceding claims, **characterised in that** the length of the annular bead (21) corresponds to approximately half of the axial width of the flange (15).

6. Flange connection according to one of Claims 1 to 4, **characterised in that** the length of the annular bead (21) corresponds to approximately two-thirds of the axial width of the flange (15).

7. Flange connection according to one of Claims 1 to 4, **characterised in that** the length of the annular bead (21) corresponds to approximately one-third of the axial width of the flange (15).

8. Flange connection according to one of the preceding claims, **characterised in that** the flange inner surface (20) and the flange bearing surface (13) are of contoured form.

## Revendications

1. Connexion à brides (10) pour tuyaux (11), récipients, appareils ou analogues en matière synthétique, avec deux brides (15) et deux pièces tubulaires (30) à relier à celles-ci, en particulier connexion à brides plaques tournantes avec des collerettes présoudées, chaque pièce tubulaire (30) présentant une collerette annulaire (12), avec une surface d'étanchéité (14) et une surface d'appui de bride (13), ainsi qu'un tronçon tubulaire (16) cylindrique, et les brides (15) étant serrables les unes contre les autres à l'aide de vissages de bride (19) et, de l'extérieur, contre les surfaces d'appui de bride (13) des collerettes annulaires (12), l'enveloppe du tronçon tubulaire (16) se transformant, par l'intermédiaire d'une rainure de gorge (17), en la surface d'appui de bride (13), dans laquelle est usinée la rainure de gorge (17), dans laquelle s'engage un bourrelet annulaire (21) formé par la bride (15), **caractérisée en ce que** chaque bride (15) présente une chambre à section transversale à peu près cunéiforme, formée par le bourrelet annulaire (21) et par une surface intérieure de bride (20), associée à la collerette annulaire (12), s'étendant de façon inclinée, en partant de la racine du bourrelet annulaire, en direction de la surface d'étanchéité (14), et chaque collerette annulaire (12) constituant une saillie (29) à section transversale à peu près cunéiforme, s'engageant dans la chambre avec une liaison à ajustement de forme.

2. Connexion à brides selon la revendication 1,
**caractérisée en ce que** la surface intérieure de bride (20) présente une inclinaison comprise entre 20° et 35°.

3. Connexion à brides selon la revendication 1 ou 2, **caractérisée en ce que** la surface intérieure de bride (20) présente une inclinaison d'à peu près 27°.

4. Connexion à brides selon l'une des revendications 1 à 3, **caractérisée en ce que** le diamètre intérieur de la bride (15) correspond sensiblement au diamètre extérieur du tronçon tubulaire (16) cylindrique, et que la bride (15) présente, sur son bord intérieur, le bourrelet annulaire (21) s'engageant dans la rainure de gorge (17).

5. Connexion à brides selon l'une des revendications précédentes, **caractérisée en ce que** la longueur du bourrelet annulaire (21) correspond à peu près à la moitié de la largeur axiale de la bride (15).

6. Connexion à brides selon l'une des revendications 1 à 4, **caractérisée en ce que** la longueur du bourrelet annulaire (21) correspond à peu près à deux tiers de la largeur axiale de la bride (15).

7. Connexion à brides selon l'une des revendications 1 à 4, **caractérisée en ce que** la longueur du bourrelet annulaire (21) correspond à peu près à un tiers de la largeur axiale de la bride (15).

8. Connexion à brides selon l'une des revendications précédentes, **caractérisée en ce que** la surface intérieure de bride (20) et la surface d'appui de bride (13) sont profilées.
